# EUROPEAN PATENT APPLICATION

(11) **EP 4 179 932 A1**
(43) Date of publication of application: **17.05.2023**
(21) Application number: 21207572.5
(22) Date of filing: 10.11.2021
(51) Int. Cl.: A47J 43/046

(54) **A KITCHEN APPLIANCE**

(71) Applicant: Versuni Holding B.V., 5656 AE Eindhoven (NL)
(72) Inventor: FLOESSHOLZER, Hannes Uwe, 5656 AE Eindhoven (NL); HIETBRINK, Ingrid, 5656 AE Eindhoven (NL); VAUPOT, Jan, 5656 AE Eindhoven (NL)
(74) Representative: Vollering, Stefanus Franciscus Maria

(57) **Abstract**

A kitchen appliance comprises a base with first portion of a magnetic drive coupling and a container with a second portion of a magnetic drive coupling. A separator arrangement is provided for axially separating the first portion of the magnetic drive coupling from the second portion of the magnetic drive coupling. The separator arrangement comprises a pivotable lever with mechanical advantage for moving up and down the first portion of the magnetic coupling within the container. Axial separation of the two portions of the drive coupling is used to provide a partial release of the coupling force, so that the container may be more easily removed from the base.

## Description

### FIELD OF THE INVENTION

This invention relates to kitchen appliances, and in particular kitchen appliances with a tool located in a food container, and the food container being removably attachable to a base.

### BACKGROUND OF THE INVENTION

Kitchen appliances are for example for food preparation or for food cooking. One example of food preparation kitchen appliance is a blender, with a separable base and container (which includes or is attached to a tool holder). This type of configuration is for example common for smoothie makers as well as blenders in general. Other kitchen appliances with a separable base and container may be arranged for chopping, kneading, centrifuging or ventilating.

One example of a food cooking kitchen appliance is an air fryer. An air fryer incorporates a fan for circulating heated air around a food container, which food container then comprises a cooking chamber. A tool in the form of a fan is then arranged in the food container for circulating the heated air. Thus, the tool in this case may be a fan or other airflow generator such as pump.

The term "tool" in this application is thus intended to cover a tool for processing food or fan or pump for controlling air flow, and the term "container" is intended to cover a container for food for processing and/or a container functioning as a cooking chamber.

To be able to handle and clean the food container, without the base of the device, the food container is removable from the base. The most common way of coupling the tool of the removable food container to the base of the device is by means of a mechanical coupling. This coupling for example has a drive part which projects from the base, which is driven by a motor in the base, and a receiving part in the bottom of the food container. The food container is for example attached to the base by a bayonet coupling.

Another means of coupling between the base and the tool holder is a magnetic drive coupling. In such a coupling, for example, the motor in the base may drive a ring of magnets, and a tool holder of the container has a corresponding ring of magnets which rotate by magnetic coupling between the two rings. The rings of magnets have the same even number of, evenly distributed, permanent magnets, forming pairs in both rings, with the polarities preferably alternating around the ring, and with magnets of opposite polarity facing each other between the rings. A coupling with the magnet poles mounted alternately around a ring is stronger than a coupling with the magnets mounted all in the same direction, because this prevents the driving part and the driven part from rotating relatively to each other. The magnetic parts do not touch, and a layer of non-magnetic material may be provided between the base and the container.

One advantage of a magnetic coupling is that the contact surfaces between the two parts can be substantially flat (with no rotary mechanical interlocking features as for example in a mechanical coupling) and this allows an aesthetically pleasing and easy-to-clean design. It also simplifies the mounting of the container to the base; it may simply be slid into place. It also has reduced sound level can cannot become overloaded. A magnetic coupling of this type is becoming increasingly popular.

In order to increase the strength of the magnetic coupling, and thereby enable a higher transfer of torque between the motor and the tool holder in the container, stronger magnets are desired. However, the use of stronger magnets makes it more difficult to remove the container from the base. Thus, it can become difficult for the user to remove the container for cleaning.

There is therefore a need for a design which allows the container to be removed more easily from the base while still enabling a strong magnetic coupling for transferring torque.

### SUMMARY OF THE INVENTION

The invention is defined by the claims.

According to examples in accordance with an aspect of the invention, there is provided a kitchen appliance comprising:
a base housing a motor, the base having an upper surface and a first portion of a magnetic drive coupling beneath the upper surface, wherein the first portion comprises a first magnet arrangement;
a container, wherein a bottom side of the container is for mounting on the base, wherein the container houses:
   a tool; and
   a second portion of the magnetic drive coupling for magnetically coupling with the first portion of the magnetic drive coupling, such that the tool is driven by the motor of the base via the magnetic drive coupling, wherein the second portion comprises a second magnet arrangement; and
a separator arrangement for axially separating the first portion of the magnetic drive coupling from the second portion of the magnetic drive coupling, wherein the separator arrangement comprises a pivotable lever with mechanical advantage for moving up and down the second portion of the magnetic coupling within the container.

This appliance is designed such that axial separation of the two magnet arrangements is used to provide a partial release of the coupling force between the two couplings, so that the container may be more easily removed from the base.

By lifting the second portion of the magnetic coupling within the container, the container does not need to be moved to implement the release. Thus, no external space needs to be taken up by the movements which release the magnetic coupling.

The pivotable lever for example has a mechanical advantage of at least 2.

The mechanical advantage makes it easier for the user to overcome the coupling force of the magnetic coupling, because a reduced force needs to be applied by the user. This reduced force can be applied in a more controlled way. Thus, the risk of accidents and strain injury is reduced. The mechanical advantage may be at least 3, for example at least 4.

The pivotable lever may comprise a handle of the container. In this case, there is no additional actuator in that the existing handle can be used. This simplifies the use of the separator arrangement, in that the user is already familiar with gripping the container by the handle. In this case, the handle is moved (relative to the rest of the container) to release the magnetic coupling, and the handle can then be used to lift the container.

The container may instead have a handle and a handle part of the pivotable lever is located within a grip area of the container handle. In this case, the lever is similar to a trigger (i.e. the handle part of the lever) within a handle. By gripping the handle and handle part of the lever, the separator arrangement is actuated. Again, the use of the separator arrangement is simple for the user.

The first magnet arrangement for example comprises a first set of permanent magnets with alternating polarity around the first set and the second magnet arrangement comprises a second set of permanent magnets with alternating polarity around the second set.

This provides a strong magnetic coupling for transferring torque across the magnetic drive coupling.

In all examples, the container may be attached to a tool holder. The container for example fits to the base with no rotary mechanical interlocking.

The kitchen appliance for example comprises a blender and wherein the tool comprises a blade or comprising a vessel and wherein the tool comprises a stirrer or comprises an air fryer and wherein the tool comprises a fan blade.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a kitchen appliance of the type to which the invention may be applied;
Figure 2 shows the magnetic coupling between the base and the tool holder;
Figure 3 shows a perspective view of the magnetic drive coupling;
Figure 4 shows a graph of magnetic coupling strength versus spacing distance;
Figure 5 show a first arrangement for releasing the magnetic coupling between the portions of the magnetic drive coupling;
Figure 6 shows a second arrangement for releasing the magnetic coupling between the portions of the magnetic drive coupling; and
Figure 7 shows another kitchen appliance to which the invention may be applied.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a kitchen appliance which comprises a base with a first portion of a magnetic drive coupling and a container with a second portion of a magnetic drive coupling. A separator arrangement is provided for axially separating the first portion of the magnetic drive coupling from the second portion of the magnetic drive coupling. The separator arrangement comprises a pivotable lever with mechanical advantage for moving up and down the second portion of the magnetic coupling within the container. Axial separation of the two portions of the drive coupling is thereby used to provide a partial release of the coupling force, so that the container may be more easily removed from the base.

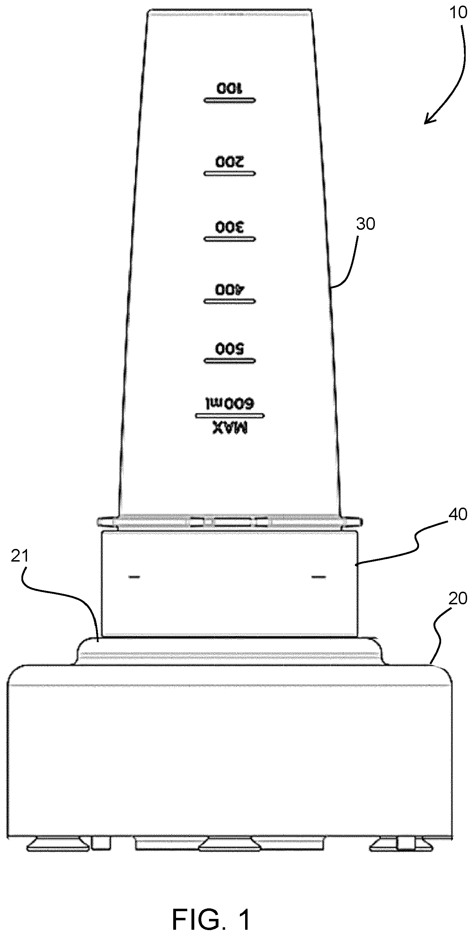

Figure 1 shows a kitchen appliance of the type to which the invention may be applied, in the form of a food processing device. The kitchen appliance 10 comprises a base 20 housing a motor and a container 30. The container for example connects to a tool holder 40. The tool holder 40 fits over a top opening of the container, for example by a screw fit. The tool holder houses a tool, typically a rotary tool such as a blending blade, although reciprocating tools may also be driven.

The container is filled with food items to be blended, and the tool holder is then fitted over the top. Thus, the tool holder functions as a lid of the container. The container is then inverted to mount it over the base, in the orientation shown in Figure 1. In an alternative design, a conventional container is used with a lid on top, and the base is provided with a part of the coupling.

In traditional designs, there is a mechanical interlocking to fit the tool holder 40 to the base 20, such as a bayonet coupling. This coupling provides mechanical connection of the container ( and the attached tool holder) to the base as well as providing a rotary coupling.

This invention instead relates to a design in which the rotary coupling is implemented using a magnetic drive coupling. The magnetic drive coupling for example has a first portion in the base 20 and a second portion in the tool holder 40. The magnetic attraction between the two parts provides both a rotary coupling and a mechanical alignment. Thus, there is no need for interlocking mechanical parts.

The base 20 instead has a basically flat upper surface 21 over which the tool holder sits. The first portion of the magnetic drive coupling is beneath the flat upper surface 21 and the second portion is within the tool holder 40. The flat surface may have shape features for interfacing with the tool holder for guiding the tool holder to be positioned accurately so that the magnets are properly aligned. There may however also be surface features such as pins etc., where the container can be loaded, but these do not create a mechanical rotary coupling.

A bottom side of the tool holder 40 mounts over the base 20 but as mentioned above this may use magnetic attraction only. Thus, the tool holder fits to the base with no mechanical interlocking. There may be a lip or contoured surface to assist with the correct placement and alignment of the tool holder over the base, but the surfaces are basically flat for easy cleaning. Surface friction prevents the container from rotating.

Each drive coupling portion for example comprises a ring of magnets with alternating polarity. The north poles of the first portion of the magnetic drive coupling align with the south poles of the second portion of the magnetic drive coupling (and vice versa). In this way, torque can be transferred, but also the tool holder is releasably attached to the base by magnetic forces.

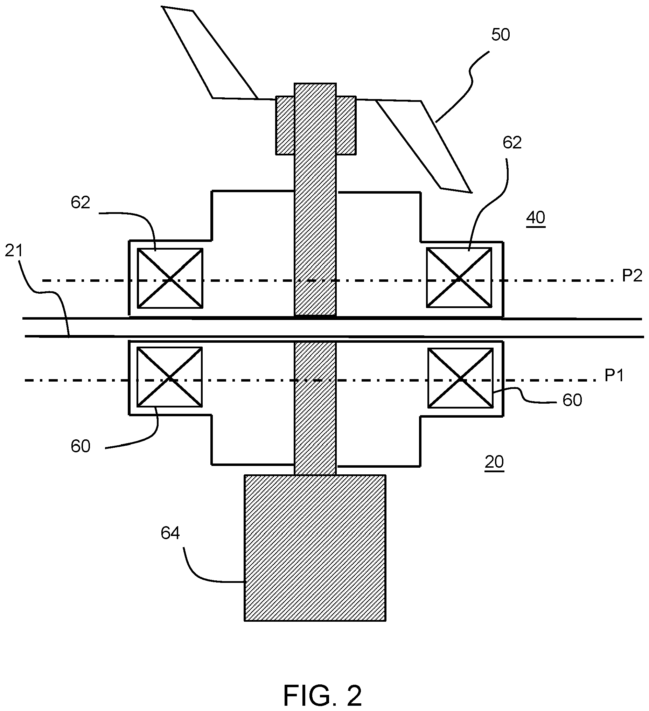

Figure 2 shows the magnetic coupling between the base 20 and the tool holder 40 at the bottom of the container. The base 20 supports the tool, typically a rotary tool 50, at the bottom of the container.

The base 20 houses a motor 64 which drives a first portion 60 of the magnetic drive coupling. This first portion 60 is beneath the upper surface 21 and comprises a first ring of permanent magnets extending in a first plane P1.

The container houses a second portion 62 of the magnetic drive coupling, for magnetically coupling with the first portion 60 of the magnetic drive coupling such that the rotary tool 50 is driven by the motor 64 of the base 20 via the magnetic drive coupling. The second portion 62 comprises a second ring of permanent magnets extending in a second plane P2.

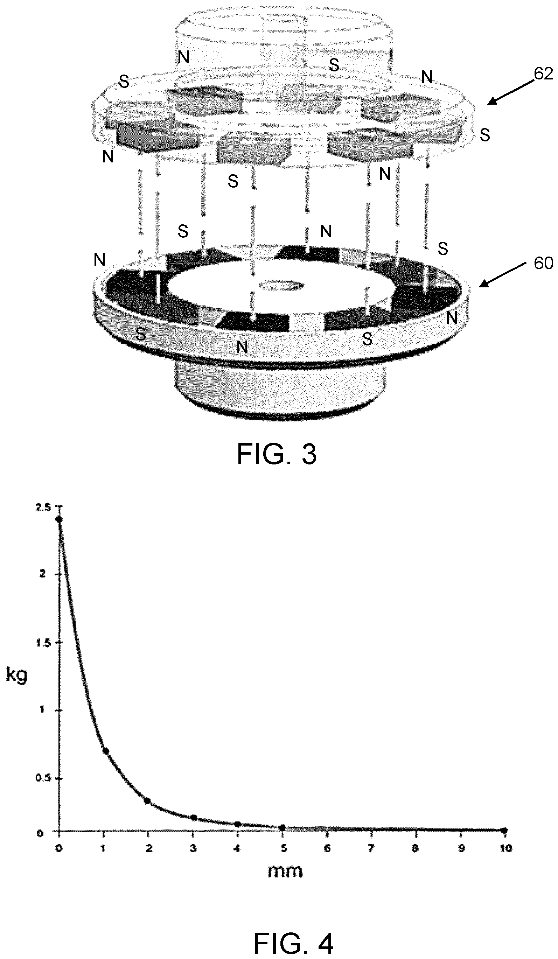

Figure 3 shows a perspective view of the magnetic drive coupling. It shows more clearly that each portion 60, 62 comprises a circular ring of magnets. Facing magnets have opposite polarity and therefore attract. As shown for the second portion 62, each ring of magnets comprises an alternating sequence of opposite polarity magnets. This enables the transfer of greater torque between the portions.

The optimal position for the transfer of torque from one portion of the magnetic drive coupling to the other is when the coupling parts are aligned, parallel and as close to each other as possible.

Increasing the distance between the coupling parts in an axial direction decreases the strength of the magnetic attraction dramatically as shown by the graph of Figure 4, which shows the magnetic coupling strength in kg (where 1kg force = 9.8N) versus spacing distance. As can be seen in the graph of Figure 4, a distance of 0.5mm can halve the magnetic attraction force.

The invention provides designs for providing axial separation of the two portions of the magnetic drive coupling, hence with relative separation in a direction perpendicular to the planes P1 and P2.

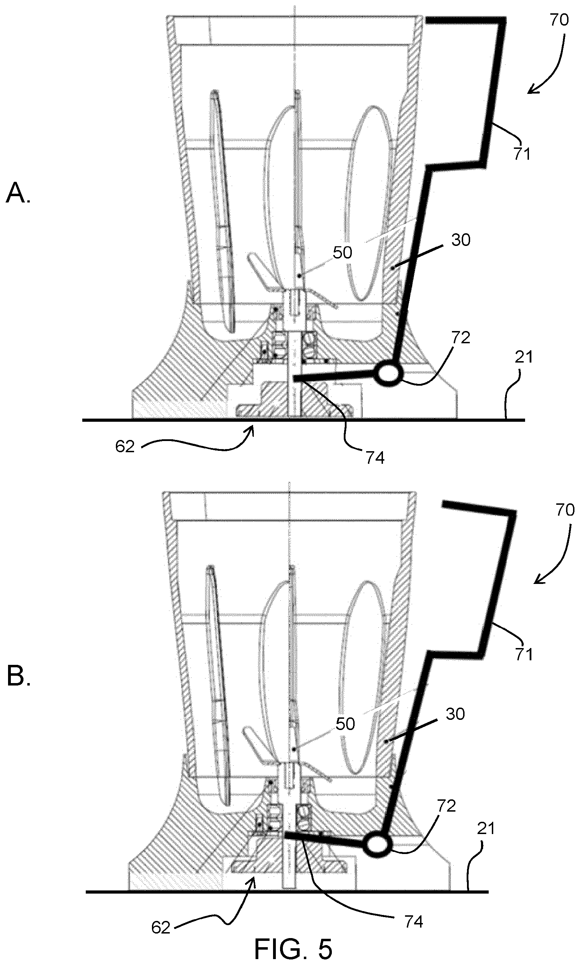

Figure 5 shows a first example of an arrangement for releasing the magnetic coupling (i.e. reducing the magnetic attraction force) between the portions of the magnetic drive coupling. Only the container 30 is shown. It is placed over the first portion of the magnetic drive coupling (not shown), which is part of the base 20. The upper surface 21 of the base is shown.

Figure 5 shows the tool 50 within the container 30, and the second portion 62 of the magnetic drive coupling, for magnetically coupling with the first portion of the magnetic drive coupling in the base

A separator arrangement is provided, in the form of a lever 70 for axially separating the first portion 60 of the magnetic drive coupling from the second portion 62 of the magnetic drive coupling. The lever 70 is pivotable about a pivot 72. A first end 71 of the lever at one side of the pivot point is a handle part for manual actuation by a user, and a second end 74 of the lever at the opposite side of the pivot 72 is an actuator part which engages with the magnetic drive coupling, in particular the second portion 62 of the drive coupling, within the container.

The pivotable lever 70 has mechanical advantage, in that the handle part 71 is further from the pivot than the actuator part 74. For example, the mechanical advantage is at least 2 or at least 3 or at least 4.

The mechanical advantage makes it easier for the user to overcome the coupling force of the magnetic coupling, because a reduced force needs to be applied by the user. This reduced force can be applied in a more controlled way. Thus, the risk of accidents and strain injury is reduced. The mechanical advantage may be at least 3, for example at least 4.

The operation of the lever, and hence the function implemented by the actuator part 74, is to provide axial separation of the two portions of the drive coupling 60, 62 and thereby provide a partial release of the coupling force so that the container may be more easily removed from the base.

The second portion 62 of the magnetic coupling moves within the container, i.e. relatively to the main outer housing of the container. Thus, the container does not need to be moved to implement the release. Thus, no space needs to be taken up by the movements which release the magnetic coupling.

Figure 5 shows an example in which the pivotable lever 70 is the handle of the container. Thus, the handle pivots relatively to the main container housing. This simplifies the use of the separator arrangement, in that the user is already familiar with gripping the container by the handle. The handle is moved (relatively to the rest of the container) to release the magnetic coupling, and the handle can also be used to lift the container.

Figure 5A shows the magnetic drive coupling in the engaged state. The top of the handle is positioned inwardly against the outer wall of the container. The actuator part 74 pushes down on the second portion 62 of the drive coupling so it is magnetically coupled with the first portion in the base. Note that the actuator part does not necessarily push down, in that the magnetic attraction will move the second portion 62 towards the first portion in any case. The magnetic attraction between the couplings thus also holds the portions together and thus retains the handle part 71 in the inward position.

Figure 5B shows the magnetic drive coupling in the disengaged state. The top of the handle is pulled outwardly by a user. This lifts the actuator part 74 against the magnetic attraction between the two portions of the drive coupling. This pulls up the second portion 62 of the magnetic drive coupling.

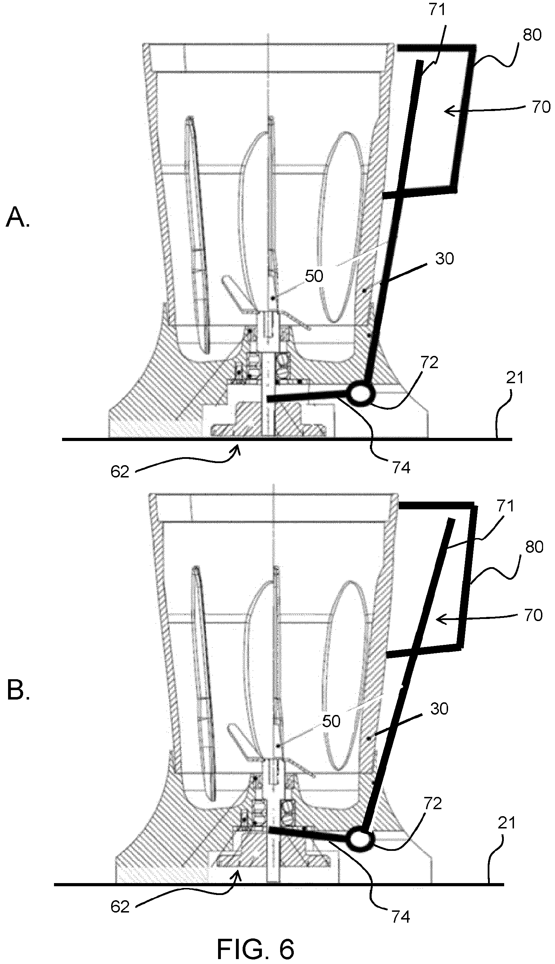

Figure 6 shows an example in which the container has a static handle 80, and the handle part 71 of the pivotable lever 70 is located within a grip area of the container handle 80. In this case, the lever is similar to a trigger within a handle. By gripping the handle and lever and hence pulling the handle part 71 outwardly, the separator arrangement is actuated. Again, the use of the separator arrangement is simple for the user.

Figure 6A shows the magnetic drive coupling in the engaged state. The handle part 71 of the lever 70 is positioned at an inner location, but spaced from the outer wall of the container so the use can engage around the handle part 71 with their fingers like a trigger. The actuator part 74 sits on, or pushes down on, the second portion 62 of the drive coupling so it is magnetically coupled with the first portion in the base. The magnetic attraction between the couplings again holds the portions together and thus retains the handle part 71 in the inward position.

Figure 5B shows the magnetic drive coupling in the disengaged state. The handle part 71 of the lever 70 is pulled outwardly by a user, but within the grip area of the handle 80. This lifts the actuator part 74 which pulls up the second portion 62 of the magnetic drive coupling.

Various detailed designs for the lever are possible, and the lever design has only been shown schematically in the examples above. The actuator part of the lever should of course not have any influence on the free rotation of the portions of the drive coupling, and only implement adjustment of the relative axial positions, where the axis is the vertical axis, i.e. the rotation axis of the portions of the drive coupling.

The examples above show a container with a separate tool holder. However, the invention may equally be applied to a container with a fixed bottom at which the tool is mounted.

The examples above relate to a food processing kitchen appliance, wherein the tool is typically used to process food before cooking and the container is a vessel for food processing. The food processing may also take place during cooking when the appliance is also for cooking e.g. for stirring during the cooking process. In such a case, the container may be a vessel for both food processing and cooking.

The invention as described through the various examples may also be applied to an appliance only for food cooking, and the tool is for example for controlling the cooking environment rather than processing the food. The container is then a cooking chamber and the tool is for example for controlling an air flow.

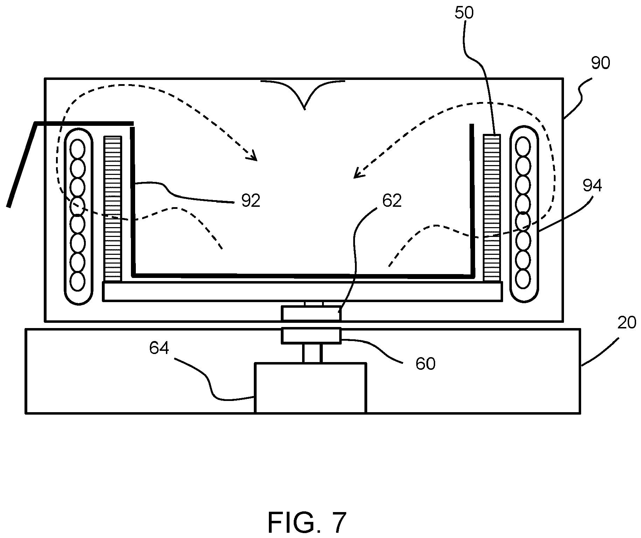

Figure 7 shows an example of an air fryer, having a base 20 housing a motor 64 and a container in the form of a food cooking chamber 90 in which there is a tool 50 in the form of a fan blade for circulating heated air around the cooking chamber. The first and second portions 60,62 of the magnetic drive coupling are shown. The base 20 houses the motor 64 which drives the first portion 60 of the magnetic drive coupling. The container houses the second portion 62 of the magnetic drive coupling, for magnetically coupling with the first portion 60 of the magnetic drive coupling such that the tool 50 is driven by the motor 64 of the base 20 via the magnetic drive coupling. The food is held in a basket 92, and the fan blade circulates air around the food and through the basket, which has at least perforated side walls. A handle is attached either to the container/ food cooking chamber 90 or to the basket 92 so that the container can be removed from the base by the user.

In one example, the cooking chamber has a heater 94, and the coupling between the base 20 and the cooking chamber 90 also provides an electrical power coupling to the heater 94. This electrical power coupling is for example wireless by inductive power transfer.

The magnetic coupling between the base and the container in this case enables driving of the fan blade. It means the container part (the cooking chamber) of the air fryer does not need to be separately plugged in, and the motor for driving the fan is in the base 20.

In another example of air fryer, the heater is in the base 20. In this case, heat may be transferred to the cooking chamber by inductive heating. In this case, no electrical power transfer is needed between the base and the container.

The base 20 may for example be one hob of the cooking surface of a cooker, so that different appliances may be applied to the hob. For example, the same design of base 20 and its magnetic coupling 60 may be used to drive a food processing appliance such as a blender or a food cooking device such as an air fryer. A cooking appliance wireless power transfer is for example disclosed in WO 2018/024913.

The invention may thus be applied to any kitchen appliance having a tool driven by a magnetic coupling from a motor in a separate base. The tool is for example a rotary tool and it may be for beating, whisking, blending, stirring, mixing, airflow control etc.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (10) comprising:
a base (20) housing a motor (64), the base having an upper surface (21) and a first portion (60) of a magnetic drive coupling beneath the upper surface, wherein the first portion comprises a first magnet arrangement;
a container, wherein a bottom side of the container is for mounting on the base (20), wherein the container houses:
a tool (50); and
a second portion (62) of the magnetic drive coupling for magnetically coupling with the first portion (60) of the magnetic drive coupling, such that the tool (50) is driven by the motor (64) of the base via the magnetic drive coupling, wherein the second portion comprises a second magnet arrangement; and
a separator arrangement (70,71,72,74) for axially separating the first portion (60) of the magnetic drive coupling from the second portion (62) of the magnetic drive coupling, wherein the separator arrangement comprises a pivotable lever (70) with mechanical advantage for moving up and down the second portion of the magnetic coupling within the container (30).

2. The kitchen appliance of claim 1, wherein the pivotable lever (70) has a mechanical advantage of at least 2.

3. The kitchen appliance of claim 2, wherein the pivotable lever comprises (70) a handle of the container.

4. The kitchen appliance of claim 2, wherein the container has a handle (80) and wherein a handle part (71) of the pivotable lever (70) is located within a grip area of the container handle.

5. The kitchen appliance of any one of claims 1 to 4, wherein:
the first magnet arrangement comprises a first set of permanent magnets with alternating polarity around the first set; and
the second magnet arrangement comprises a second set of permanent magnets with alternating polarity around the second set.

6. The kitchen appliance of any one of claims 1 to 5 further comprising a tool holder (40) attached to the container.

7. The kitchen appliance of any one of claims 1 to 6, wherein the container (40) fits to the base (20) with no rotary mechanical interlocking.

8. The kitchen appliance of any one of claims 1 to 7, comprising a blender and wherein the rotary tool comprises a blade, or comprising a vessel and wherein the tool comprises a stirrer, or comprising an air fryer and wherein the tool comprises a fan blade.
